# EUROPÄISCHE PATENTSCHRIFT

(11) **EP 4 246 268 B1**
(45) Veröffentlichungstag und Bekanntmachung des Hinweises auf die Patenterteilung: **24.07.2024**
(21) Anmeldenummer: 23162077.4
(22) Anmeldetag: 15.03.2023
(51) Int. Cl.: G05D 1/00, G01C 21/20

(54) **VERFAHREN ZUM SICHEREN BESTIMMEN EINES FLUGPFADS EINES UNBEMANNTEN FLUGGERÄTS UND UNBEMANNTES FLUGGERÄT**
METHOD FOR SAFELY DETERMINING A FLIGHT PATH OF AN UNMANNED AERIAL VEHICLE AND UNMANNED AERIAL VEHICLE
PROCÉDÉ DE DÉTERMINATION SÉCURISÉE D'UN TRAJET DE VOL D'UN VÉHICULE AÉRIEN SANS PILOTE ET VÉHICULE AÉRIEN SANS PILOTE

(30) Priorität: 16.03.2022 DE 102022106110
(43) Veröffentlichungstag der Anmeldung: 20.09.2023
(73) Patentinhaber: Spleenlab GmbH, 07929 Saalburg-Ebersdorf (DE)
(72) Erfinder: Karthigeyan, Sukumar, 07356 Bad Lobenstein (DE); Ammapalayam Ravichandran, Ashwanth, 07356 Bad Lobenstein (DE); Hagen, Chris, 07356 Bad Lobenstein (DE); Milz, Dr. Stefan, 07929 Saalburg-Ebersdorf (DE); Ölsner, Florian, 07743 Jena (DE)
(74) Vertreter: Bittner, Thomas L.

(56) Entgegenhaltungen:
- US-A1- 2016 299 231
- US-A1- 2018 157 220

## Beschreibung

Die Erfindung betrifft ein Verfahren zum sicheren Bestimmen eines Flugpfads eines unbemannten Fluggeräts sowie ein unbemanntes Fluggerät.

### Hintergrund

Zum Bestimmen eines Flugpfads oder einer Flugbahn eines unbemannten Fluggeräts sind Verfahren bekannt, bei denen der gewünschte Flugpfad unter Verwendung eines Positionsbestimmungssystems fortdauernd bestimmt, um das unbemannte Fluggerät für die Bewegung entlang eines dreidimensionalen Flugpfades entsprechend zu steuern. Beispielsweise ist es bekannt, ein Satelliten-Navigationssystem, zum Beispiel das GPS-System, für die räumliche Positionsbestimmung und so für die Steuerung des unbemannten Fluggeräts zu verwenden. Eine Positionsbestimmung unter Verwendung des Satelliten-Navigationssystems kann in einzelnen Flugphasen gestört oder gar nicht möglich sein, beispielsweise dann, wenn die Signale der Satelliten von den entsprechenden Sensoren an dem unbemannten Fluggerät nicht empfangen werden können oder gestört sind.

Das Dokument WO 2020 / 006709 A1 beschreibt ein visuelles Positionierungssystem umfassend ein Linsenmodul, ein Übereinstimmungsmodul, ein Übersetzungsmodul und ein Sensormodul. Das unbemannte Luftfahrzeug weist einen Körper auf, der eine untere Seite hat, und das Linsenmodul ist auf der unteren Seite vorgesehen. Das Linsenmodul hat ein weites Sichtfeld und erfasst eine Reihe von Bildern eines Bereichs unter dem unbemannten Luftfahrzeug im Laufe der Zeit während des Flugs. Das Übereinstimmungsmodul vergleicht Merkmale in jedem Bild der Reihe von Bildern, um erste Daten abzuleiten, und das Übersetzungsmodul übersetzt die ersten Daten in Positionierungsdaten. Das visuelle Positionierungssystem ermöglicht es dem unbemannten Luftfahrzeug, zusätzliche/alternative Positionierungsinformationen zu erhalten.

In dem Dokument US 2019 / 340197 A1 ist Bildanalysesystem offenbart, das maschinelles Lernen unter Verwendung einer Vielzahl von Lehrdaten durchführt, die ein Etikett, das angibt, was das Objekt ist, mit Bilddaten verknüpft, an denen das Etikett angebracht ist. Das Bildanalysesystem umfasst ein Bildgebungsbedingungsanalysemodul, das die Bildgebungsbedingung von Lehrdaten analysiert, und ein Kamerasteuermodul, das eine Kamera steuert, um ein Bild unter der analysierten Bildgebungsbedingung aufzunehmen, um das unter der Bildgebungsbedingung aufgenommene Bild zu analysieren.

Aus dem Dokument US 2021 / 247764 A1 ist ein Verfahren zum Steuern eines unbemannten Luftfahrzeugs in einer Umgebung bekannt, welches das Empfangen erster und zweiter Erfassungssignale von einem Sichtsensor bzw. einem Näherungssensor umfasst, die mit dem UAV gekoppelt sind.

Das Dokument US 2018/157220 A1 zeigt ein Verfahren, bei dem eine Drohne ihre Position mit einer ersten Positionsbestimmungseinrichtung, wie einem GPS, bestimmt. Die Position wird überprüft und falls die Position unplausibel erscheint, wird der Positionswert einer zweiten Positionsbestimmungseinrichtung verwendet.

Das Dokument US 2016/299231 A1 zeigt die Positionsbestimmung bei einer Drohne mit zwei unterschiedlchen GPS Empfängern, deren Positionsdaten zur Plausibilisierung miteinander verglichen werden. Die Positionswerte werden nur dann als zuverlässig eingestuft, wenn ein Unterschied der Positionswerte unterhalb einer Schwelle liegt.

### Zusammenfassung

Aufgabe der Erfindung ist es, ein Verfahren zum sicheren Bestimmen eines Flugpfads eines unbemannten Fluggeräts sowie ein unbemanntes Fluggerät anzugeben, die es ermöglichen, das unbemannte Fluggerät auch dann sicher für die Bewegung entlang eines dreidimensionalen Flugpfads zu steuern, wenn ein Positionsbestimmungssystem des unbemannten Fluggeräts gestört oder nicht verfügbar ist.

Zur Lösung sind ein Verfahren zum sicheren Bestimmen eines Flugpfads eines unbemannten Fluggeräts sowie ein unbemanntes Fluggerät nach den unabhängigen Ansprüchen 1 und 9 geschaffen. Ausgestaltungen sind Gegenstand von abhängigen Unteransprüchen.

Nach einem Aspekt ist ein Verfahren zum sicheren Bestimmen eines Flugpfads eines unbemannten Fluggeräts geschaffen, bei dem ein unbemanntes Fluggerät entlang eines dreidimensionalen Flugpfads bewegt wird und hierbei Folgendes wiederholt vorgesehen ist: Bestimmen erster Positionsdaten für eine räumlichen Position des unbemannten Fluggeräts entlang des dreidimensionalen Flugpfads mittels eines ersten, dem unbemannten Fluggerät als Mastersystem zugeordneten Positionsbestimmungssystems; Bestimmen zweiter Positionsdaten für die räumlichen Position des unbemannten Flugobjekts, unabhängig von dem Bestimmen der ersten Positionsdaten, mittels eines zweiten, dem unbemannten Fluggerät zugeordneten Positionsbestimmungssystems, welches von dem ersten Positionsbestimmungssystem verschieden ist; Ausführen einer Plausibilitätsprüfung für die ersten Positionsdaten, wobei hierbei für die ersten Positionsdaten und die zweiten Positionsdaten geprüft wird, ob diese zumindest einer ersten Prüfvorgabe genügen; Bestimmen der ersten Positionsdaten als räumliche Position des unbemannten Fluggeräts, wenn die Plausibilitätsprüfung ergibt, dass die ersten Positionsdaten und die zweiten Positionsdaten der zumindest ersten Prüfvorgabe genügen; und Steuern der Bewegung des unbemannten Fluggeräts entlang des dreidimensionalen Flugpfads entsprechend der räumlichen Position. Das erste und das zweite Positionsbestimmungssystem sind aus der folgenden Gruppe von Positionsbestimmungssystemen ausgewählt: (i) Satelliten-Navigationssystem; (ii) bild-basiertes Positionsbestimmungssystem, welches eingerichtet ist, die ersten oder die zweiten Positionsdaten aus Bildaufnahmen einer Umgebung des unbemannten Fluggeräts unter Verwendung einer auf künstlicher Intelligenz basierenden Bildanalyse zu bestimmen; und (iii) Lidar-Positionsbestimmungssystem, welches eingerichtet ist, die ersten oder die zweiten Positionsdaten aus dreidimensionalen optischen Messungen der Umgebung des unbemannten Fluggeräts unter Verwendung einer auf künstlicher Intelligenz basierenden Messdatenanalyse zu bestimmen.

Nach einem weiteren Aspekt ist ein unbemanntes Fluggerät geschaffen, welches Folgendes aufweist: ein erstes Positionsbestimmungssystem, das dem unbemannten Fluggerät als Mastersystem zugeordnet ist, und ein zweites Positionsbestimmungssystem, das dem unbemannten Fluggerät zugeordnet und von dem ersten Positionsbestimmungssystem verschieden ist. Das erste und das zweite Positionsbestimmungssystem sind aus der folgenden Gruppe von Positionsbestimmungssystemen ausgewählt: (i) Satelliten-Navigationssystem; (ii) bild-basiertes Positionsbestimmungssystem, welches eingerichtet ist, die ersten oder die zweiten Positionsdaten aus Bildaufnahmen einer Umgebung des unbemannten Fluggeräts unter Verwendung einer auf künstlicher Intelligenz basierenden Bildanalyse zu bestimmen; und (iii) Lidar-Positionsbestimmungssystem, welches eingerichtet ist, die ersten oder die zweiten Positionsdaten aus dreidimensionalen optischen Messungen der Umgebung des unbemannten Fluggeräts unter Verwendung einer auf künstlicher Intelligenz basierenden Messdatenanalyse zu bestimmen. Das unbemannte Fluggerät ist eingerichtet, unter Verwendung des ersten und des zweiten Positionsbestimmungssystems das Verfahren zum sicheren Bestimmen des Flugpfads auszuführen.

Mit Hilfe des ersten und des zweiten Positionsbestimmungssystems wird die (aktuelle) räumliche Position des unbemannten Fluggeräts fortdauernd (über den gewünschten Zeitraum, zum Beispiel die Zeit eines Flugs vom Starten bis zum Landen) redundant bestimmt, um hiervon ausgehend die Bewegung des unbemannten Fluggeräts zu steuern. Die ersten und die zweiten Positionsdaten werden unabhängig voneinander mit Hilfe unterschiedlicher Positionsbestimmungssysteme ermittelt. Frei von einer Fusion der mittels der Positionsbestimmungssysteme ermittelten Positionsdaten wird die räumliche Position des unbemannten Fluggeräts bestimmt, wobei die mit dem Mastersystem (erstes Positionsbestimmungssystem) bestimmten ersten Positionsdaten als die die räumliche Position des unbemannten Fluggeräts angebenden Positionsdaten bestimmt und für die Bewegungssteuerung angewendet werden, wenn bei der Plausibilitätsprüfung bestimmt wird, dass die ersten Positionsdaten und die zweiten Positionsdaten der zumindest ersten Prüfvorgabe genügen. Beispielsweise kann die erste Prüfvorgabe fordern, dass die ersten und die zweiten Positionsdaten innerhalb vorbestimmter Fehlergrenzen übereinstimmen. Da die Bestimmung der ersten und der zweiten Positionsdaten unabhängig voneinander mit getrennten und verschiedenen Positionsbestimmungssystemen erfolgt, ist auf diese Weise die Sicherheit beim Bestimmen der räumlichen Position des unbemannten Fluggeräts und der hierauf basierenden Steuerung des unbemannten Fluggeräts entlang des Flugpfads erhöht.

In zumindest einem der beiden Positionsbestimmungssysteme, die für das Ermitteln der ersten und der zweiten Positionsdaten verwendet werden, erfolgt das Bestimmen der Positionsdaten unter Verwendung künstlicher Intelligenz, sei es für die Bildanalyse und / oder die Auswertung der dreidimensionalen optischen Messungen (Lidar-Positionsbestimmungssystem).

Beim Ausführen der Plausibilitätsprüfung für die ersten Positionsdaten und die zweiten Positionsdaten kann geprüft werden, ob diese einer zweiten Prüfvorgabe genügen; und die zweiten Positionsdaten können als räumliche Position des unbemannten Fluggeräts bestimmt werden, wenn die Plausibilitätsprüfung ergibt, dass die ersten Positionsdaten und die zweiten Positionsdaten der zumindest ersten Prüfvorgabe nicht genügen, aber der zweiten Prüfvorgabe. Es kann vorgesehen sein, die zweite Prüfvorgabe nur dann zu prüfen, wenn im Rahmen der Plausibilitätsprüfung bestimmt wird, dass die ersten und die zweiten Positionsdaten der ersten Prüfvorgabe nicht genügen, beispielsweise der Abstand zwischen den anhand der ersten und der zweiten Positionsdaten angegebenen Positionen für das unbemannte Fluggerät außerhalb vorgegebener Fehlergrenzen liegt. In diesem Fall kann dann eine zweite Prüfvorgabe herangezogen werden, die beispielsweise eine größere Fehlertoleranz (einen größeren Positionsabstand) vorgibt. Genügen die ersten und die zweiten Positionsdaten der zweiten Prüfvorgabe, ergibt sich die räumliche Position des unbemannten Fluggeräts den zweiten Positionsdaten entsprechend. Die Steuerung des unbemannten Fluggeräts erfolgt dann unter Berücksichtigung der zweiten Positionsdaten für die (aktuelle) räumliche Position des unbemannten Fluggeräts. Beispielsweise kann ein anstehender Flugbewegungsabschnitt dann ausgehend von den zweiten Positionsdaten gesteuert und durchgeführt werden.

Für das unbemannte Fluggerät kann eine Notfallmaßnahme eingeleitet werden, wenn die Plausibilitätsprüfung ergibt, dass die ersten Positionsdaten und die zweiten Positionsdaten weder der zumindest ersten Prüfvorgabe noch der zweiten Prüfvorgabe genügen. Wenn zum Beispiel ein Vergleich der ersten und der zweiten Positionsdaten ergibt, dass diese weder der ersten noch der zweiten Prüfvorgabe genügen, ist bei diesem Ausführungsbeispiel vorgesehen, eine Notfallmaßnahme für das unbemannte Fluggerät einzuleiten, beispielsweise eine Notlandung. Erste und zweite Prüfvorgabe können zum Beispiel unterschiedliche Fehlertoleranzbereiche für eine Abweichung zwischen den ersten und den zweiten Positionsdaten angeben. Genügen die ersten und die zweiten Positionsdaten keiner der Prüfvorgaben, wird die Notfallmaßnahme eingeleitet. Diese kann auch darin bestehen, dass unbemannte Fluggerät zu einem ursprünglichen Ausgangspunkt der dreidimensionalen Flugbahn zurückzubewegen.

Alternativ kann die Notfallmaßnahme eingeleitet werden, wenn die ersten und die zweiten Positionsdaten allein der ersten Prüfvorgabe nicht genügen.

Für das unbemannte Fluggerät kann die Notfallmaßnahme in einem Beispiel erst eingeleitet werden, wenn zusätzlich festgestellt wird, dass die ersten Positionsdaten und / oder die zweiten Positionsdaten einer Fehlerprüfvorgabe erfüllen. Auch wenn die ersten und die zweiten Positionsdaten weder die erste noch die zweite Prüfvorgabe erfüllen, wird die Notmaßnahme bei diesem Beispiel nur dann eingeleitet, wenn festgestellt wird, dass die ersten und / oder die zweiten Positionsdaten eine Fehlerprüfvorgabe genügen, beispielsweise dann, wenn die ersten und / oder die zweiten Positionsdaten außerhalb einer für die Positionsdaten vorgegebenen Fehlergrenze liegen. Sollten die ersten und die zweiten Positionsdaten zwar weder der ersten noch der zweiten Prüfvorgabe genügen, aber die Fehlerprüfvorgabe nicht erfüllen, kann vorgesehen sein, in diesem Fall die ersten oder die zweiten Positionsdaten für die (aktuelle) räumliche Position des unbemannten Fluggeräts heranzuziehen, beispielsweise auf Basis einer Wichtungsvorgabe bezüglich der ersten und der zweiten Positionsdaten.

Als erstes, dem unbemannten Fluggerät als Mastersystem zugeordnetes Positionsbestimmungssystem kann das Satelliten-Navigationssystem verwendet werden, und als zweites, dem unbemannten Fluggerät zugeordnetes Positionsbestimmungssystem kann das bild-basierte Positionsbestimmungssystem oder das Lidar-Positionsbestimmungssystem verwendet werden. Als Mastersystem für die Positionsbestimmung, dessen ermittelte erste Positionsdaten als räumliche Position des unbemannten Fluggeräts bestimmt werden, wenn die zumindest erste Prüfvorgabe erfüllt ist, ist bei diesem Beispiel das Satelliten-Navigationssystem vorgesehen. Ist die erste Prüfvorgabe erfüllt, erfolgt die Steuerung des unbemannten Fluggeräts entlang des dreidimensionalen Flugpfads fortdauernd anhand der Positionsdaten, die mit dem Satelliten-Navigationssystem bestimmt werden, bei dem es sich beispielsweise um ein GPS-System handelt. Ist mittels des Satelliten-Navigationssystems eine Positionsbestimmung (zeitweise) nicht möglich, können die zweiten Positionsdaten herangezogen werden, die mittels des bild-basierten Positionsbestimmungssystems oder des Lidar-Positionsbestimmungssystems bestimmt wurden.

In verschiedenen Ausführungsformen kann vorgesehen sein, zusätzlich dritte Positionsdaten mit einem dritten Positionsbestimmungssystem zu bestimmen, welches von dem ersten und dem zweiten Positionsbestimmungssystem verschieden ist. Die dritten Positionsdaten können dann bei der Plausibilitätsprüfung ergänzend herangezogen werden. Beispielsweise dahingehend, dass die ersten Positionsdaten gemäß einer jeweiligen Prüfvorgabe mit den zweiten und den dritten Positionsdaten jeweils verglichen werden. Die räumliche Position des unbemannten Fluggeräts kann dann anhand der ersten Positionsdaten bestimmt werden, wenn die erste und die zweite Prüfvorgabe erfüllt sind. Ansonsten kann beispielsweise hierauf die Fehlerprüfvorgabe ausgeführt werden.

In dem bild-basierten Positionsbestimmungssystem kann zum Bestimmen der ersten oder der zweiten Positionsdaten aus den Bildaufnahmen bei der Verwendung der auf künstlicher Intelligenz basierenden Bildanalyse eine aktuelle Pose des unbemannten Fluggeräts basierend auf einem zuvor mittels eines neuronalen Netzwerks ermittelten optischen Fluss für die Bildaufnahmen bestimmt werden. Als Pose oder räumliche Lage wird üblicherweise die Kombination von Position und Orientierung des Objekts (unbemanntes Fluggerät) im herangezogenen Koordinatensystem bezeichnet. Der optische Fluss einer Folge von Bildaufnahmen ist üblicherweise ein Vektorfeld von in die Bildebene projizierten Geschwindigkeiten von sichtbaren Punkten oder Bildpixeln des Objektraumes im Koordinatensystem. Der optische Fluss ist eine Repräsentation von Bewegungsinformationen bei der Bildanalyse oder -verarbeitung.

In dem Lidar-Positionsbestimmungssystem kann zum Bestimmen der ersten oder der zweiten Positionsdaten aus den dreidimensionalen optischen Messungen bei der Verwendung der auf künstlicher Intelligenz basierenden Messdatenanalyse eine aktuelle Pose des unbemannten Fluggeräts basierend auf einem zuvor mittels eines neuronalen Netzwerks ermittelten optischen Fluss für die dreidimensionalen optischen Messungen bestimmt werden. Bei der Auswertung der dreidimensionalen optischen Messungen des Lidar-Positionsbestimmungssystems werden Auswerteschritte bei der Positionsdatenbestimmung dem Verfahren im Zusammenhang mit dem bild-basierten Positionsbestimmungssystem entsprechend angewendet.

Für die räumliche Position kann ein Optimierungsprozess ausgeführt werden, bei dem, unter Einbeziehung von Disparitätsdaten, eine lokale und eine globale Bündelanpassung, auch Bündelblockausgleich, durchgeführt werden. Verfahren zur lokalen und globalen Bündelanpassung im Zusammenhang mit der dreidimensionalen Lage- oder Positionsbestimmung sind als solche in verschiedenen Ausführungsformen bekannt. Bündelanpassungen dienen dazu, eine Positionstrajektorie über mehrere Zeitschritte (Verlauf nacheinander bestimmter Positionen für das unbemannte Fluggerät) hinweg zu optimieren. Dies kann zum Einen (lokaler Bündelblockausgleich) dafür genutzt werden, um sogenannte Drift-Effekte, ein sukzessives Abweichen der geschätzten Trajektorie vom echten Positionspfad, entgegenzuwirken. Zum Anderen (global) wird es dafür genutzt, um eine Schleife des Positionsverlaufs zu erkennen und damit eine noch bessere Positionsgenauigkeit zu erhalten. Prinzipiell werden die Lichtstrahlbündel unterschiedlicher Messungen, zum Beispiel zeitlich getrennte Bildaufnahmen, gegeneinander optimiert.

Die im Zusammenhang mit dem Verfahren zum sicheren Bestimmen des Flugpfads des unbemannten Fluggeräts vorangehend erläuterten Ausgestaltungen können einzeln oder in beliebiger Kombination in Verbindung mit dem unbemannten Fluggerät entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung funktioneller Komponenten eines unbemannten Fluggeräts, die eingerichtet sind, für das unbemannte Fluggerät eine redundante Positionsbestimmung auszuführen;
- Fig. 2: eine schematische Darstellung für ein bild-basiertes Positionsbestimmungssystem für das unbemannte Fluggerät;
- Fig. 3: eine schematische Darstellung für ein Lidar-Positionsbestimmungssystem für das unbemannte Fluggerät und
- Fig. 4: eine schematische Darstellung betreffend einer Kombination von lokaler und globaler Bündelanpassung für zuvor bestimmte räumliche Positionsdaten.

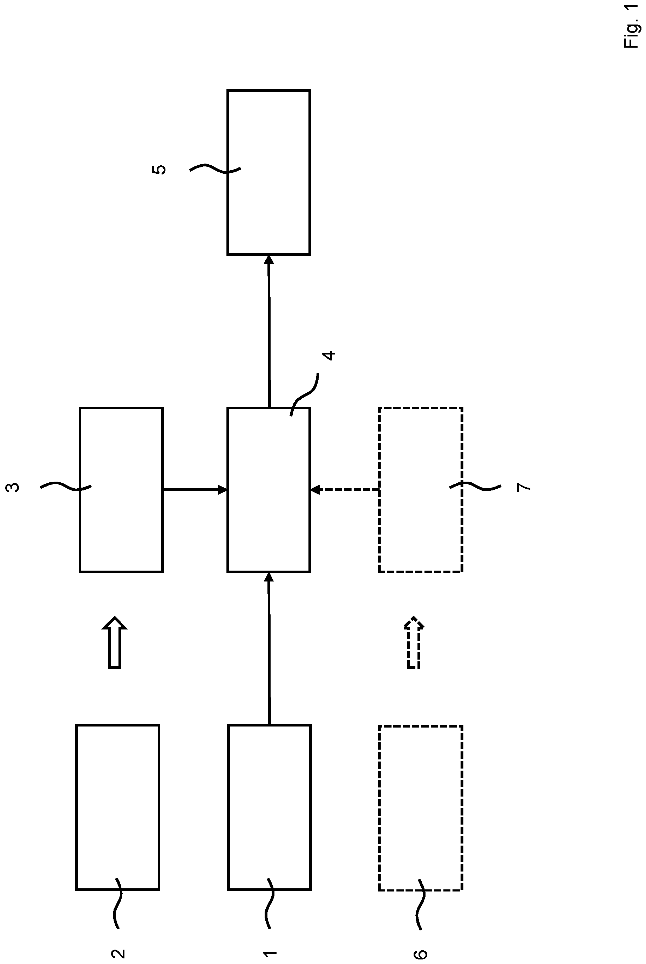

Fig. 1 zeigt eine schematische Darstellung funktioneller Komponenten zum Steuern eines unbemannten Fluggeräts, wenn dieses sich entlang eines dreidimensionalen Flugpfads bewegt wird, insbesondere funktionelle Komponenten zum wiederholten Bereitstellen von (aktuellen) räumlichen Positionsdaten für das unbemannte Fluggerät.

Es ist ein erstes Positionsbestimmungssystem 1 vorgesehen, bei dem es sich um ein Satelliten-Navigationssystem handelt, beispielsweise ein GPS-System. Das erste Positionsbestimmungssystem 1 ist eingerichtet, für die Bestimmung einer (aktuellen) räumlichen Position des unbemannten Fluggeräts fortdauernd erste Positionsdaten zu bestimmen. Satelliten-Positionsbestimmungssysteme sind als solche in verschiedenen Ausführungsformen bekannt und liefern Positionsdaten in einem zugeordneten Koordinatensystem.

Das unbemannte Fluggerät weist weiterhin ein zweites Positionsbestimmungssystem 2 auf, bei dem es sich um ein bild-basiertes Positionsbestimmungssystem handelt, welches eingerichtet ist, für das unbemannte Fluggerät zweite Positionsdaten aus Bildaufnahmen für die Umgebung des unbemannten Fluggeräts zu bestimmen. Hierzu ist eine auf künstliche Intelligenz basierende Bildanalyse 3 vorgesehen.

Für eine Plausibilitätsprüfung 4 liefern das erste Positionsbestimmungssystem 1 erste Positionsdaten und das zweite Positionsbestimmungssystem 2 zweite Positionsdaten. Bei der Plausibilitätsprüfung 4 werden die ersten und die zweiten Positionsdaten zumindest einer ersten Prüfvorgabe entsprechend verglichen oder geprüft. Beispielsweise gibt die erste Prüfvorgabe einen vorgegebenen Abstand zwischen den ersten Positionsdaten und den zweiten Positionsdaten an.

Die Plausibilitätsprüfung kann auf unterschiedliche Weise in Abhängigkeit von einer Kritikalität der Anwendung erfolgen, insbesondere gemäß den Prinzipien sicherer Systeme. Hierbei können das Multi-Kanal-Prinzip, das Überwachen und / oder das Sicherheitstor unterschieden werden. Beim Multi-Kanal-Prinzip werden die ersten Positionsdaten vom ersten Positionsbestimmungssystem 1 und die zweiten Positionsdaten vom zweiten Positionsbestimmungssystem 2 gegeneinander geprüft und gegebenenfalls mittels Optimierung, zum Beispiel Mittelwert-Berechnung aus ersten und zweiten Positionsdaten, zu zwei Ausgangssignalen oder einem sicheren Signal (Positionsdaten) verarbeitet. Beim Überwachen bildet ein Pfad, also das erste Positionsbestimmungssystem 1 oder das zweite Positionsbestimmungssystem 2, einen Checker und ein anderer Pfad einen Doer. Bei Inkonsistenz wird der Doer abgeschaltet und erzwingt einen anderen Zustand des Gesamtsystems. Beim Sicherheitstor werden vom Checker nur validierte Signale weitergeleitet.

Genügen die ersten und die zweiten Positionsdaten der zumindest ersten Prüfvorgabe, bestimmen die ersten Positionsdaten die (aktuelle) räumliche Position des unbemannten Fluggeräts, also die Positionsdaten, welche mit dem Satelliten-Navigationssystem (erstes Positionsbestimmungssystem 1) bestimmt wurden, welches dem unbemannten Fluggerät als Mastersystem zugeordnet ist. Die Steuerung des unbemannten Fluggeräts mithilfe einer Steuereinrichtung 5 erfolgt dann basierend auf oder ausgehend von der räumlichen Position, also insbesondere basierend auf den ersten Positionsdaten.

Insbesondere dann, wenn die ersten und die zweiten Positionsdaten bei der Plausibilitätsprüfung 4 der zumindest ersten Prüfvorgabe nicht genügen, kann vorgesehen sein, zumindest eine zweite Prüfvorgabe beider Plausibilitätsprüfung 4 einzubeziehen, wobei die zweite Prüfvorgabe beispielsweise im Vergleich zur ersten Prüfvorgabe einen größeren (tolerierbaren) Abstand zwischen den ersten und den zweiten Positionsdaten angibt. Genügen die ersten und die zweiten Positionsdaten der zweiten Prüfvorgabe (aber nicht der ersten Prüfvorgabe), so ist in einem Beispiel vorgesehen, die räumliche Position des unbemannten Fluggeräts gleich den zweiten Positionsdaten zu setzen und das unbemannte Fluggerät dann ausgehend hiervon oder basierend hierauf bei der Bewegung entlang des dreidimensionalen Flugpfads zu steuern.

Die redundante und unabhängige Bestimmung der ersten und der zweiten Positionsdaten mittels des ersten und des zweiten Positionsbestimmungssystems 1, 2, insbesondere frei von einer Fusion von Messdaten und / oder bestimmten Positionsdaten, ermöglicht eine Absicherung der mittels des Mastersystems bestimmten Positionsdaten, dahingehend, dass diese im Rahmen der Plausibilitätsprüfung 4 anhand der zweiten Positionsdaten überprüft oder verglichen werden.

Genügen die ersten und die zweiten Positionsdaten weder der ersten noch der zweiten Prüfvorgabe, kann vorgesehen sein, für das unbemannte Fluggerät eine Notfallmaßnahme einzuleiten, beispielsweise das unbemannte Fluggerät einer Notlandung entsprechend zu steuern. Eine solche Notmaßnahme kann alternativ auch schon dann vorgesehen sein, wenn die ersten und die zweiten Positionsdaten allein der ersten Prüfvorgabe nicht genügen.

In einem Beispiel kann vorgesehen sein, eine Fehlerprüfvorgabe für die ersten und die zweiten Positionsdaten auszuführen, wenn diese weder der ersten noch der zweiten Prüfvorgabe genügen. Beispielsweise kann die Fehlerprüfvorgabe eine Fehlergrenze für einen Abstand zwischen den ersten und den zweiten Positionsdaten angeben. Eine Notfallmaßnahme kann beispielsweise nur dann vorgesehen sein, wenn zusätzlich festgestellt wurde, dass die ersten und die zweiten Positionsdaten der Fehlerprüfvorgabe genügen, also einen (fehlerhaften) Mindestabstand zueinander anzeigen.

Gemäß Fig. 1 ist bei dem Ausführungsbeispiel wahlweise ein drittes Positionsbestimmungssystem 6 vorgesehen, bei dem es sich um ein Lidar-Positionsbestimmungssystem handelt, welches eingerichtet ist, Positionsdaten aus dreidimensionalen optischen Messungen der Umgebung des unbemannten Fluggeräts (unter Verwendung einer auf künstliche Intelligenz basierenden Messdatenanalyse) zu bestimmen, ebenfalls unabhängig von der Positionsdatenbestimmung im ersten und zweiten Positionsbestimmungssystem 1, 2. Das zweite und das dritte Positionsbestimmungssystem 2, 6 können jeweils in Kombination mit dem ersten Positionsbestimmungssystem 1 beim Steuern des unbemannten Fluggeräts verwendet werden. Es kann auch vorgesehen sein, neben den ersten und den zweiten Positionsdaten dritte Positionsdaten mit dem dritten Positionsbestimmungssystem 6 mittels einer Messdatenanalyse 7 redundant und unabhängig von den anderen Positionsbestimmungen zu ermitteln. Hierdurch kann eine weitere Sicherheitsstufe implementiert werden, insbesondere um die vom Mastersystem bereitgestellten Positionsdaten zusätzlich und unabhängig von dem Vergleich zwischen den ersten und den zweiten Positionsdaten zu überprüfen.

Insgesamt werden die von dem Mastersystem, also im gezeigten Ausführungsbeispiel von den ersten Positionsbestimmungssystem 1 bereitgestellten ersten Positionsdaten für die (aktuelle) räumliche Position und somit für die Steuerung des unbemannten Fluggeräts nur dann herangezogen, wenn die Plausibilitätsprüfung 4 erfolgreich war, also eine Prüfvorgabe hinsichtlich der zweiten und / oder der dritten Positionsdaten in Bezug auf die ersten Positionsdaten erfüllt ist. Im Unterschied zu einer Sensorsignal- oder Sensordatenfusion werden mit Hilfe der Positionsbestimmungssysteme unabhängig voneinander und in redundanter Art und Weise jeweils Positionsdaten bestimmt, um dann die Positionsdaten des Mastersystems auf Plausibilität zu prüfen. Alternativ zur Bestimmung des Satelliten-Navigationssystems als Mastersystem können das zweite oder das dritte Positionsbestimmungssystem 2, 6 als Mastersystem dem unbemannten Fluggerät zugeordnet sein.

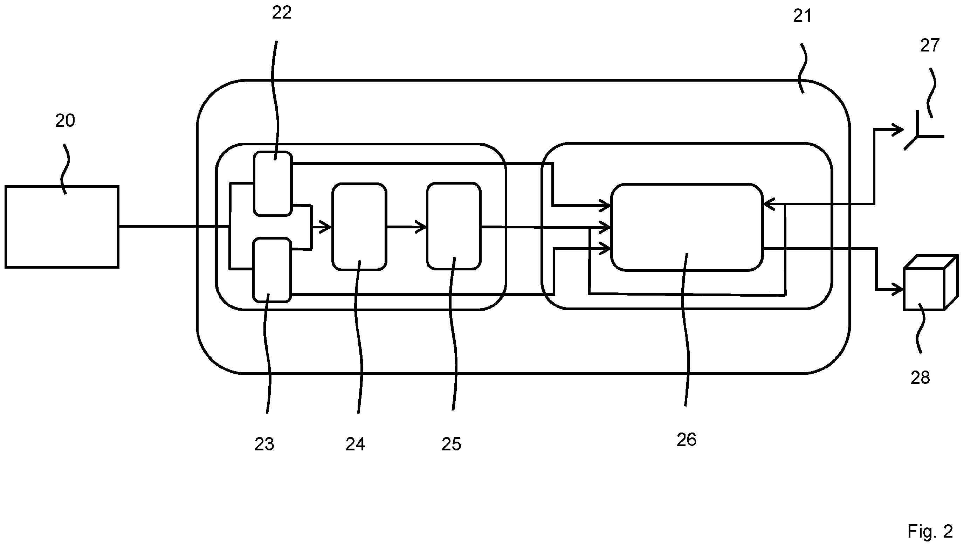

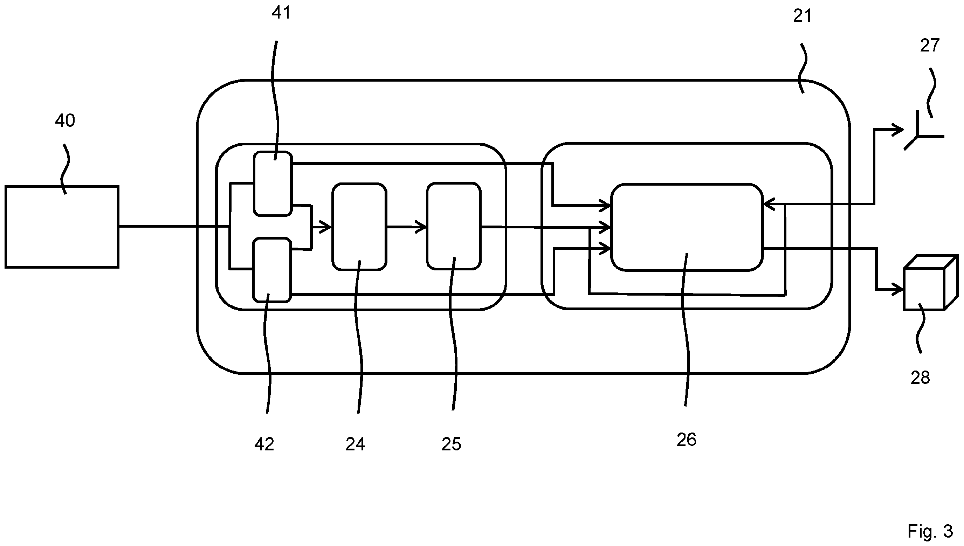

Fig. 2 und 3 zeigen schematische Darstellungen betreffend das Bestimmen der ersten und der zweiten Positionsdaten unter jeweiliger Verwendung künstlicher Intelligenz ausgehend von den Bildaufnahmen der Umgebung (bild-basiertes Positionsbestimmungssystem) oder den dreidimensionalen optischen Messungen (Lidar-Positionsbestimmungssystem).

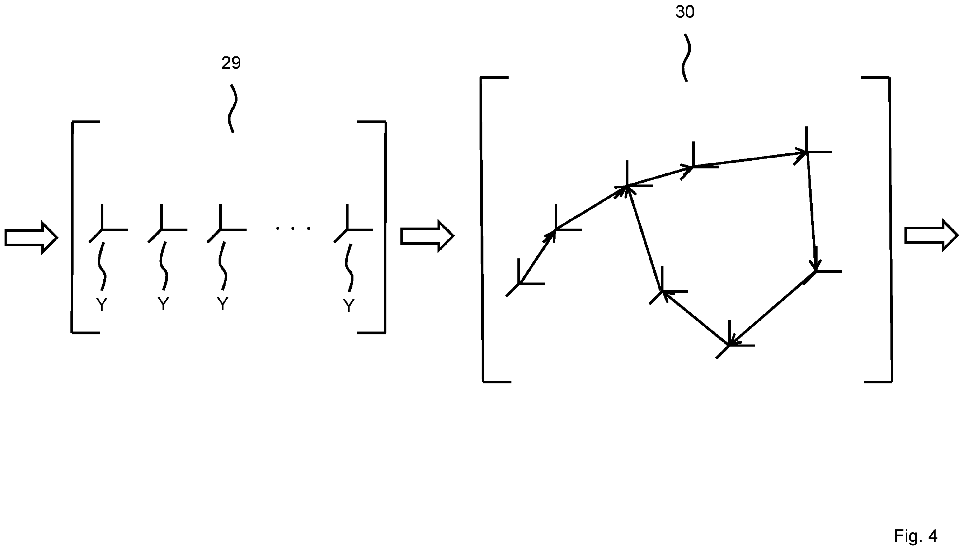

Gemäß Fig. 2 werden mit Hilfe einer oder mehrerer Kameras 20 Bildaufnahmen für die Umgebung des unbemannten Fluggeräts aufgenommen. In einem Tracking-Mapping-Modul 21, welches hardware- und softwaretechnisch implementiert ist, werden zwei zeitlich aufeinanderfolgende Bildaufnahmen 22, 23 einem neuronalen Netzwerk 24 als Eingang zur Verfügung gestellt. Das neuronale Netz 24 empfängt so zum Beispiel zwei dreidimensionale digitale Bildmatrizen (RGB) mit der Auflösung der Kamera(s) 20. Das neuronale Netzwerk 24 ermittelt einen optischen Fluss 25, also eine pixelbasierte Registrierung der beiden Bildaufnahmen 22, 23, welche sich als Vektorfeld (Pixel-Verschiebung pro Pixel) mit einer Grid-Größe der Bildmatrix widerspiegelt. Der optische Fluss 25 dient als Eingabe für ein weiteres neuronales Netz 26, welches eine Posenschätzung durchführt. Als Eingabe für das weitere neuronale Netz 26 dienen außerdem die beiden Bildaufnahmen 22, 23 sowie die Ergebnisse der vorherigen Posenschätzung aus dem weiteren neuronalen Netz 26 vom vorherigen Zeitschritt (iterativ). Das weitere neuronale Netz 26 empfängt im gezeigten Beispiel folgende Eingangsvariablen: zwei dreidimensionale Bildmatrizen (Bildaufnahmen 22, 23, RGB-Bilder); Pose vom vorherigen Zeitschritt; eine eindimensionale Bildmatrix (Tiefe vom vorherigen Zeitschritt); eine zweidimensionale Bildmatrix (optischer Fluss 25), welche die Tiefe pro Pixel schätzt; sowie die Position als sechs-dimensionaler Vektor. Die ausgegebenen Positionsdaten 27 sowie Disparitäts- bzw. Tiefendaten 28 werden im gezeigten Beispiel (optional) einer lokalen sowie einer globalen Bündelanpassung 29, 30 zugeführt werden (vgl. Fig. 4 unten).

Fig. 3 zeigt eine schematische Darstellung für eine Positionsbestimmung unter Verwendung künstlicher Intelligenz vergleichbar dem in Verbindung mit Fig. 2 beschriebenen Vorgehen, wobei hier mit Hilfe eines Lidar-Sensor-Systems 40 dreidimensionale optische Messdaten erfasst werden, die anschließend zur Positionsbestimmung für das unbemannte Fluggerät ausgewertet werden. Für gleichartige Merkmale werden in Fig. 3 dieselben Bezugszeichen wie in Fig. 2 verwendet. So werden aufeinanderfolgende Messdaten 41, 42 dem neuronalen Netzwerk 24 zum Bestimmen des optischen Flusses 25 übermittelt. Im Vergleich zum Kamera basierten Verfahren (vgl. Fig. 2) enthalten die aufeinanderfolgenden Messdaten 41, 42 hier ein Grid von Lidar-Messpunkten, welche im Vergleich zu Kamerabilddaten zwei Werte pro Pixel annehmen (Tiefe und Intensität), wobei die Pixelkoordinate den Rasterpunkt in einer Lidar-Messwelt darstellt.

Fig. 4 zeigt eine schematische Darstellung betreffend die lokale und die globale Bündelanpassung 29, 30 unter Verwendung der Positionsdaten 27 sowie der Disparitäts-Daten 28 (vgl. Fig. 2 und 3). Die verschiedenen Positionsdaten werden mittels der Bündelanpassung 29, 30 optimiert. Hierbei werden die einzelnen Seh-Strahlbündel der Messungen zu den Positionswerten über mehrere Messungen hinweg optimiert. Verfahren und Prozesse zur lokalen und / oder globalen Bündelanpassung sind als solche in verschiedenen Ausführungsformen bekannt (vgl. beispielsweise Agarwal et al., Bundle adjustment in the large. In Computer Vision - ECCV 2010, 11th European Conference on Computer Vision, p. 29-42, 2010).

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum sicheren Bestimmen eines Flugpfads eines unbemannten Fluggeräts, bei dem ein unbemanntes Fluggerät entlang eines dreidimensionalen Flugpfads bewegt wird und hierbei Folgendes wiederholt vorgesehen ist:
- Bestimmen erster Positionsdaten für eine räumlichen Position des unbemannten Fluggeräts entlang des dreidimensionalen Flugpfads mittels eines ersten, dem unbemannten Fluggerät als Mastersystem zugeordneten Positionsbestimmungssystems (1);
- Bestimmen zweiter Positionsdaten für die räumlichen Position des unbemannten Flugobjekts, unabhängig von dem Bestimmen der ersten Positionsdaten, mittels eines zweiten, dem unbemannten Fluggerät zugeordneten Positionsbestimmungssystems (2; 6), welches von dem ersten Positionsbestimmungssystem (1) verschieden ist;
- Ausführen einer Plausibilitätsprüfung (4) für die ersten Positionsdaten, wobei hierbei für die ersten Positionsdaten und die zweiten Positionsdaten geprüft wird, ob diese zumindest einer ersten Prüfvorgabe genügen;
- Bestimmen der ersten Positionsdaten als räumliche Position des unbemannten Fluggeräts, wenn die Plausibilitätsprüfung (4) ergibt, dass die ersten Positionsdaten und die zweiten Positionsdaten der zumindest ersten Prüfvorgabe genügen; und
- Steuern der Bewegung des unbemannten Fluggeräts entlang des dreidimensionalen Flugpfads entsprechend der räumlichen Position;
wobei das erste und das zweite Positionsbestimmungssystem aus der folgenden Gruppe von Positionsbestimmungssystemen ausgewählt sind: (i) Satelliten-Navigationssystem; (ii) bild-basiertes Positionsbestimmungssystem, welches eingerichtet ist, die ersten oder die zweiten Positionsdaten aus Bildaufnahmen einer Umgebung des unbemannten Fluggeräts unter Verwendung einer auf künstlicher Intelligenz basierenden Bildanalyse zu bestimmen; und (iii) Lidar-Positionsbestimmungssystem, welches eingerichtet ist, die ersten oder die zweiten Positionsdaten aus dreidimensionalen optischen Messungen der Umgebung des unbemannten Fluggeräts unter Verwendung einer auf künstlicher Intelligenz basierenden Messdatenanalyse zu bestimmen.

2. Verfahren nach Anspruch 1, **dadurch gekennzeichnet, dass**
- beim Ausführen der Plausibilitätsprüfung (4) für die ersten Positionsdaten und die zweiten Positionsdaten geprüft wird, ob diese einer zweiten Prüfvorgabe genügen; und
- die zweiten Positionsdaten als räumliche Position des unbemannten Fluggeräts bestimmt werden, wenn die Plausibilitätsprüfung (4) ergibt, dass die ersten Positionsdaten und die zweiten Positionsdaten der zumindest ersten Prüfvorgabe nicht, aber der zweiten Prüfvorgabe genügen.

3. Verfahren nach Anspruch 2, **dadurch gekennzeichnet, dass** für das unbemannte Fluggerät eine Notfallmaßnahme eingeleitet wird, wenn die Plausibilitätsprüfung (4) ergibt, dass die ersten Positionsdaten und die zweiten Positionsdaten weder der zumindest ersten Prüfvorgabe noch der zweiten Prüfvorgabe genügen.

4. Verfahren nach Anspruch 3, **dadurch gekennzeichnet, dass** für das unbemannte Fluggerät die Notfallmaßnahme erst eingeleitet wird, wenn zusätzlich festgestellt wird, dass die ersten Positionsdaten und / oder die zweiten Positionsdaten einer Fehlerprüfvorgabe erfüllen.

5. Verfahren nach mindestens einem der vorangehenden Ansprüche, **dadurch gekennzeichnet, dass** als erstes, dem unbemannten Fluggerät als Mastersystem zugeordnetes Positionsbestimmungssystem (1) das Satelliten-Navigationssystem und als zweites, dem unbemannten Fluggerät zugeordnetes Positionsbestimmungssystem (2; 6) das bild-basierte Positionsbestimmungssystem oder das Lidar-Positionsbestimmungssystem verwendet werden.

6. Verfahren nach mindestens einem der vorangehenden Ansprüche, **dadurch gekennzeichnet, dass** in dem bild-basierten Positionsbestimmungssystem zum Bestimmen der ersten oder der zweiten Positionsdaten aus den Bildaufnahmen bei der Verwendung der auf künstlicher Intelligenz basierenden Bildanalyse (3) eine aktuelle Pose des unbemannten Fluggeräts basierend auf einem zuvor mittels eines neuronalen Netzwerks ermittelten optischen Fluss für die Bildaufnahmen bestimmt wird.

7. Verfahren nach mindestens einem der vorangehenden Ansprüche, **dadurch gekennzeichnet, dass** in dem Lidar-Positionsbestimmungssystem zum Bestimmen der ersten oder der zweiten Positionsdaten aus den dreidimensionalen optischen Messungen bei der Verwendung der auf künstlicher Intelligenz basierenden Messdatenanalyse (7) eine aktuelle Pose des unbemannten Fluggeräts basierend auf einem zuvor mittels eines neuronalen Netzwerks ermittelten optischen Fluss für die dreidimensionalen optischen Messungen bestimmt wird.

8. Verfahren nach Anspruch 6 oder 7, **dadurch gekennzeichnet, dass** für die räumliche Position ein Optimierungsprozess ausgeführt wird, bei dem, unter Einbeziehung von Disparitätsdaten, eine lokale und eine globale Bündelanpassung durchgeführt werden.

9. Unbemanntes Fluggerät, mit
- einem ersten Positionsbestimmungssystem (1), welches dem unbemannten Fluggerät als Mastersystem zugeordnet ist; und
- einem zweiten Positionsbestimmungssystem (2; 6), welches dem unbemannten Fluggerät zugeordnet und von dem ersten Positionsbestimmungssystem (1) verschieden ist;
wobei das erste und das zweite Positionsbestimmungssystem aus der folgenden Gruppe von Positionsbestimmungssystemen ausgewählt sind: (i) Satelliten-Navigationssystem; (ii) bild-basiertes Positionsbestimmungssystem, welches eingerichtet ist, die ersten oder die zweiten Positionsdaten aus Bildaufnahmen einer Umgebung des unbemannten Fluggeräts unter Verwendung einer auf künstlicher Intelligenz basierenden Bildanalyse zu bestimmen; und (iii) Lidar-Positionsbestimmungssystem, welches eingerichtet ist, die ersten oder die zweiten Positionsdaten aus dreidimensionalen optischen Messungen der Umgebung des unbemannten Fluggeräts unter Verwendung einer auf künstlicher Intelligenz basierenden Messdatenanalyse zu bestimmen; und
wobei das unbemanntes Fluggerät eingerichtet ist, unter Verwendung des ersten und des zweiten Positionsbestimmungssystems ein Verfahren nach mindestens einem der vorangehenden Ansprüche auszuführen.

## Claims

1. A method for safely determining a flight path of an unmanned flying device, in which an unmanned flying device is moved along a three-dimensional flight path and the following is repeatedly provided:
- determining first position data for a spatial position of the unmanned flying device along the three-dimensional flight path by use of a first position-determination system (1) assigned to the unmanned flying device as master system;
- determining second position data for the spatial position of the unmanned flying device, independently of determining the first position data, by use of a second position-determination system (2; 6) assigned to the unmanned flying device, which is different from the first position-determination system (1);
- performing a plausibility test (4) for the first position data, wherein here, for the first position data and the second position data, it is checked whether these meet at least a first test requirement;
- determining the first position data as spatial position of the unmanned flying device, if the plausibility test (4) reveals that the first position data und the second position data meet the at least first test requirement; und
- steering of the movement of the unmanned flying device along the three-dimensional flight path in accordance with the spatial position;
wherein the first and the second position-determination system are selected from the following group of position-determination systems: (i) satellite navigation system; (ii) image-based position-determination system configured to determine the first or the second position data from image recordings of an environment of the unmanned flying device by using an artificial intelligence-based image analysis; and (iii) Lidar-position-determination system configured to determine the first or the second position data from three-dimensional optical measurements of the environment of the unmanned flying device by using an artificial intelligence-based measurement-data analysis.

2. The method according to claim 1, **characterized in that**
- when performing the plausibility test (4) for the first position data and the second position data, it is checked if these meet a second test requirement; and
- the second position data are determined as spatial position of the unmanned flying device if the plausibility test (4) reveals that the first position data and the second position data do not meet the at least first test requirement but do meet the second test requirement.

3. The method according to claim 2, **characterized in that** an emergency measure is initiated for the unmanned flying device if the plausibility test (4) reveals that the first position data and the second position data meet neither the at least first test requirement nor the second test requirement.

4. The method according to claim 3, **characterized in that** the emergency measure is first initiated for the unmanned flying device if it is additionally determined that the first position data and / or the second position data fulfill an error test requirement.

5. The method according to at least one of the preceding claims, **characterized in that** the satellite navigation system is used as the first position-determination system (1) assigned to the unmanned flying device as the master system and the image-based position-determination system or the lidar-position-determination system is used as the second position-determination system (2; 6) assigned to the unmanned flying device.

6. The method according to at least one of the preceding claims, **characterized in that**, in the image-based position-determination system, for determining the first or the second position data from the image recordings when using the artificial intelligence-based image analysis (3), a current pose of the unmanned flying device is determined based on an optical flow previously determined by use of a neural network for the image recordings.

7. The method according to at least one of the preceding claims, **characterized in that**, in the Lidar-position-determination system, for determining the first or the second position data from the three-dimensional optical measurements when using the artificial intelligence-based measurement-data analysis (7), a current pose of the unmanned flying device is determined based on an optical flux previously determined by use of a neural network for the three-dimensional optical measurements.

8. The method according to claim 6 or 7, **characterized in that** for the spatial position an optimization process is performed, in which a local and a global bundle adjustment are carried out, taking disparity data into account.

9. An unmanned flying device, with
- a first position-determination system (1), which is assigned to the unmanned flying device as master system; und
- a second position-determination system (2; 6), which is assigned to the unmanned flying device and which is different from the first position-determination system (1);
wherein the first and the second position-determination system are selected from the following group of position-determination systems: (i) satellite navigation system; (ii) image-based position-determination system configured to determine the first or the second position data from image recordings of an environment of the unmanned flying device by using an artificial intelligence-based image analysis; and (iii) Lidar-position-determination system configured to determine the first or the second position data from three-dimensional optical measurements of the environment of the unmanned flying device by using an artificial intelligence-based measurement-data analysis; and
wherein the unmanned flying device is configured to perform a method according to at least one of the preceding claims using the first and the second position-determination system.

## Revendications

1. Procédé pour déterminer en toute sécurité une trajectoire de vol d'un aéronef sans pilote, dans lequel un aéronef sans pilote est déplacé le long d'une trajectoire de vol tridimensionnelle et ce qui suit est prévu de manière répétée :
- détermination de premières données de position pour une position spatiale de l'aéronef sans pilote le long de la trajectoire de vol tridimensionnelle au moyen d'un premier système de détermination de position (1) attribué à l'aéronef sans pilote en tant que système maître
- détermination de deuxièmes données de position pour la position spatiale de l'aéronef sans pilote, indépendamment de la détermination des premières données de position, au moyen d'un deuxième système de détermination de position (2 ; 6) associé à l'aéronef sans pilote, qui est différent du premier système de détermination de position (1);
- exécution d'un contrôle de plausibilité (4) pour les premières données de position, dans lequel les premières données de position et les deuxièmes données de position sont vérifiées pour voir si elles répondent à au moins une première spécification de test ;
- détermination des premières données de position comme position spatiale de l'aéronef sans pilote si le contrôle de plausibilité (4) montre que les premières données de position et les deuxièmes données de position satisfont à au moins la première spécification de test ; et
- commande du mouvement de l'aéronef sans pilote le long de la trajectoire de vol tridimensionnelle correspondant à la position spatiale ;
dans lequel les premier et deuxième systèmes de positionnement sont sélectionnés parmi le groupe de systèmes de positionnement suivant : (i) un système de navigation par satellite ; (ii) un système de positionnement basé sur l'image, qui est configuré pour déterminer les premières ou deuxièmes données de position à partir d'enregistrements d'images d'un environnement de l'aéronef sans pilote en utilisant une analyse d'images basée sur l'intelligence artificielle ; et (iii) un système de positionnement lidar, qui est configuré pour déterminer les premières ou deuxièmes données de position à partir de mesures optiques tridimensionnelles de l'environnement de l'aéronef sans pilote à l'aide d'une analyse de données de mesure basée sur l'intelligence artificielle.

2. Procédé selon la revendication 1, **caractérisé en ce que**
- lors de l'exécution du contrôle de plausibilité (4) pour les premières données de position et les deuxièmes données de position, on vérifie si celles-ci répondent à une deuxième spécification de test ; et
- les deuxièmes données de position sont déterminées comme étant la position spatiale de l'aéronef sans pilote si le contrôle de plausibilité (4) montre que les premières données de position et les deuxièmes données de position ne satisfont pas à au moins la première spécification de test, mais satisfont effectivement à la deuxième spécification de test.

3. Procédé selon la revendication 2, **caractérisé en ce qu'**une mesure d'urgence est déclenchée pour l'aéronef sans pilote si le contrôle de plausibilité (4) montre que les premières données de position et les deuxièmes données de position ne répondent ni à au moins la première spécification de test ni à la deuxième spécification du test.

4. Procédé selon la revendication 3, **caractérisé en ce que** la mesure d'urgence n'est déclenchée pour l'aéronef sans pilote que lorsqu'il est en outre déterminé que les premières données de position et/ou les deuxièmes données de position répondent à une spécification de contrôle d'erreur.

5. Procédé selon au moins une des revendications précédentes, **caractérisé en ce que** comme premier système de détermination de position (1) attribué à l'aéronef sans pilote en tant que système maître, le système de navigation par satellite est utilisé et comme deuxième système de détermination de position (2 ; 6), le système de positionnement basé sur l'image ou le système de positionnement lidar est utilisé.

6. Procédé selon au moins une des revendications précédentes, **caractérisé en ce que** dans le système de positionnement à base d'images pour déterminer les premières ou deuxièmes données de position à partir des enregistrements d'images lors de l'utilisation de l'analyse d'images basée sur l'intelligence artificielle (3), une pose actuelle de l'aéronef sans pilote est déterminée sur la base d'un flux optique pour les enregistrements d'images préalablement déterminé à l'aide d'un réseau neuronal.

7. Procédé selon au moins une des revendications précédentes, **caractérisé en ce que** dans le système de détermination de position lidar pour déterminer la première ou la deuxième donnée de position à partir des mesures optiques tridimensionnelles lors de l'utilisation de l'analyse des données de mesure basée sur l'intelligence artificielle (7), une pose actuelle de l'aéronef sans pilote est déterminée sur la base d'un flux optique pour le flux optique tridimensionnel préalablement déterminé à l'aide d'un réseau neuronal.

8. Procédé selon la revendication 6 ou 7, **caractérisé en ce qu'**un processus d'optimisation est exécuté pour la position spatiale, dans lequel un ajustement de faisceau local et global est effectué, en tenant compte des données de disparité.

9. Aéronef sans pilote, comportant
- un premier système de détermination de position (1), qui est attribué à l'aéronef sans pilote en tant que système maître ; et
- un deuxième système de détermination de position (2 ; 6), qui est attribué à l'aéronef sans pilote et est différent du premier système de détermination de position (1);
dans lequel les premier et deuxième systèmes de positionnement sont sélectionnés dans le groupe suivant de systèmes de positionnement : (i) un système de navigation par satellite ; (ii) un système de positionnement basé sur l'image, qui est configuré pour déterminer les premières ou deuxièmes données de position à partir d'enregistrements d'images d'un environnement de l'aéronef sans pilote en utilisant une analyse d'images basée sur l'intelligence artificielle ; et (iii) un système de positionnement lidar, qui est configuré pour déterminer les premières ou deuxièmes données de position à partir de mesures optiques tridimensionnelles de l'environnement de l'aéronef sans pilote à l'aide d'une analyse de données de mesure basée sur l'intelligence artificielle ; et
dans lequel l'aéronef sans pilote est configuré pour mettre en oeuvre un procédé selon au moins une des revendications précédentes en utilisant les premier et deuxième systèmes de détermination de position.
